# FASCICULE DE BREVET EUROPEEN

(11) **EP 1 611 065 B1**
(45) Date de publication et mention de la délivrance du brevet: **23.04.2008**
(21) Numéro de dépôt: 04742367.8
(22) Date de dépôt: 26.03.2004
(51) Int. Cl.: C03B 23/035, C03B 23/03

(54) **PROCEDE ET DISPOSITIF DE CINTRAGE DE VITRES**
VERFAHREN UND VORRICHTUNG ZUM BIEGEN VON GLASSCHEIBEN
METHOD AND DEVICE FOR BENDING GLASS SHEETS

(30) Priorité: 29.03.2003 DE 10314267
(43) Date de publication de la demande: 04.01.2006
(73) Titulaire: SAINT-GOBAIN GLASS FRANCE, 92400 Courbevoie (FR)
(72) Inventeur: DIEDEREN, Werner, 52134 Herzogenrath (DE); BORDERIOU, Arnaud, 4700 Eupen (BE); MEISSEN, Thomas, 52499 Baesweiler (DE); RADERMARCHER, Herbert, 4730 Raeren (BE); RECKERS, Stefan, 52080 Aachen (DE)
(74) Mandataire: Colombier, Christian
(86) Numéro de dépôt international: PCT/FR2004/000763
(87) Numéro de publication internationale: WO 2004/087591

(56) Documents cités:
- EP-A- 0 613 864
- DE-A- 10 105 200
- PATENT ABSTRACTS OF JAPAN vol. 012, no. 258 (C-513), 20 juillet 1988 (1988-07-20) -& JP 63 045138 A (ASAHI GLASS CO LTD), 26 février 1988 (1988-02-26)
- PATENT ABSTRACTS OF JAPAN vol. 013, no. 205 (C-595), 15 mai 1989 (1989-05-15) -& JP 01 024034 A (NIPPON SHEET GLASS CO LTD), 26 janvier 1989 (1989-01-26)
- PATENT ABSTRACTS OF JAPAN vol. 010, no. 269 (C-372), 12 septembre 1986 (1986-09-12) -& JP 61 091025 A (NIPPON SHEET GLASS CO LTD), 9 mai 1986 (1986-05-09)

## Description

L'invention concerne un procédé de cintrage de vitres, dans lequel on pré-cintre en position horizontale, en utilisant une forme supérieure convexe à surface pleine, sur un cadre de cintrage et on finit ensuite de cintrer les vitres à l'aide d'un cadre de cintrage final agissant sur les vitres pré-cintrées. Elle se réfère également à un dispositif adapté notamment à la mise en oeuvre de ce procédé.

Les procédés de cintrage de vitres en position horizontale sont largement répandus. Habituellement, les vitres sont compressées à la forme souhaitée entre une forme supérieure à surface pleine et un support de cintrage rigide en forme de cadre. Si les rayons de cintrage des vitres dépassent une certaine valeur, les prescriptions de respect des cotes ou de la qualité optique ne peuvent souvent plus être respectées avec un tel dispositif simple, notamment la qualité optique pâtit fortement, car les surfaces du verre sont endommagées en raison de mouvements relatifs considérables entre les vitres et les outils de façonnage. De plus, cela peut provoquer des gauchissements et des refoulements de forme ondulée qui rendent inutilisable comme vitre de sécurité une vitre ainsi fabriquée, par exemple dans les véhicules automobiles. Ces gauchissements apparaissent si le façonnage de la vitre, donc son dépôt sur la surface de façonnage de l'outillage a lieu de manière incontrôlée.

Afin d'éviter ces inconvénients, on connaît une série de solutions d'utilisations. Il est par exemple proposé dans le document EP 0 411 032 B1 d'équiper la forme supérieure de plusieurs chambres d'aspiration qui débouchent dans une multitude d'alésages d'aspiration dans la surface de façonnage venant en contact avec la vitre. Les différentes chambres d'aspiration, une pour la zone centrale de la vitre et à chaque fois une pour les zones latérale fortement courbées, peuvent être sollicitées avec des dépressions différentes. On doit ainsi parvenir à ce que la zone centrale de la vitre reste en contact avec la forme supérieure lorsque les zones latérales sont comprimées contre la forme supérieure par le cadre de cintrage.

Un autre moyen pour surmonter les difficultés décrites ci-dessus a été recherché en concevant en plusieurs pièces les formes de cintrage en forme de cadres faisant office de matrice. Ceci doit permettre de cintrer d'abord et de fixer sur une forme de cintrage convexe à surface pleine une certaine zone de la vitre. On finit ensuite de cintrer la vitre en faisant pivoter une autre pièce de façonnage contre la vitre et en entraînant cette dernière jusqu'à ce qu'elle touche la matrice négative. Lorsque de telles formes de cintrage en plusieurs pièces sont utilisées, il peut dans certaines circonstances se produire des irrégularités de l'orientation du cintrage dans la zone des articulations car la surface de façonnage des formes de cintrage en forme de cadres y est interrompue. Ces inconvénients ont été observés notamment en cas de petits rayons de cintrage et à une température trop basse ou trop élevée du verre. Les documents DE 38 03 575 A1 et DE 35 27 558 A1 par exemple traitent de l'amélioration de formes de cintrage en plusieurs pièces de ce type.

Le document DE 38 03 575 A1 se réfère à un procédé de cintrage d'une vitre comportant des zones coudées suivant de petits angles de cintrage. On utilise comme outillage de cintrage une presse à cintrer comprenant un poinçon et une matrice, la matrice consistant en au moins deux pièces de façonnage reliées l'une à l'autre de manière articulée. Une fois que la presse à cintrer a touché une partie de la vitre chauffée à la température de cintrage, au moins une pièce de façonnage pivotable de la matrice est tournée autour de l'axe de pivotement contre le poinçon. Un moteur électrique réglable sert de moteur de propulsion pour déplacer les pièces de façonnage pivotables. La vitesse angulaire du mouvement de pivotement des pièces de façonnage pivotables pendant l'opération de cintrage est réglée en fonction de la température de la vitre et du degré de déformation.

Un autre moyen de surmonter les difficultés décrites ci-dessus est décrit dans le document DE 35 27 558 A1. Dans ce procédé de cintrage, une vitre chauffée à la température de cintrage est touchée par une forme de cintrage en plusieurs pièces dont les différentes pièces de façonnage sont reliées les unes aux autres de manière articulée et est cintrée par pivotement des pièces de façonnage reliées de manière articulée à la pièce de façonnage centrale pour obtenir la forme souhaitée. Les axes d'articulation des pièces de façonnage pivotables sont guidés pendant le pivotement dans des fentes de guidage le long de pistes incurvées qui ont été déterminées en fonction de la forme souhaitée de la vitre-Les cadres de façonnage des pièces de façonnage pivotables sont ainsi roulés progressivement sur la vitre et la vitre est comprimée sans mouvement relatif de glissement par rapport aux formes de cintrage progressivement contre la surface de façonnage du poinçon.

L'abrégé du JP63045138 enseigne le cintrage de vitres selon les séquences suivantes:
- les vitres sont amenées entre un premier cadre et une forme supérieure convexe à surface pleine,
- les vitres sont mises au contact par le cadre avec la forme supérieure,
- un cadre de cintrage final est amené en contact avec les zones marginales proéminentes des vitres et les vitres sont pressées contre la forme supérieure,
- les vitres dont le cintrage est terminé sont évacuées.

L'invention a pour objectif d'indiquer un autre procédé de cintrage de vitres ainsi qu'un dispositif adapté à sa mise en oeuvre.

Cet objectif est atteint au niveau du procédé suivant l'invention grâce aux caractéristiques de la revendication 1. Les caractéristiques de la revendication 9 indiquent un dispositif approprié. Les caractéristiques des revendications secondaires respectivement subordonnées aux revendications indépendantes indiquent des perfectionnements avantageux de ces objets.

Dans le procédé de cintrage selon l'invention, le façonnage des vitres chauffées à leur température de ramollissement a lieu en deux étapes de cintrage par presse successives à l'aide de deux cadres de cintrage indépendante à surfaces de façonnage (matrices) concaves qui coopèrent avec une forme supérieure convexe à surface pleine et pressent la vitre entre elles. Le cadre de cintrage pour la première étape de cintrage par presse présente un contour plus petit que le cadre de cintrage final pour la deuxième étape de cintrage par presse. Le cadre de cintrage peut être guidé à travers l'ouverture à l'intérieur des surfaces de façonnage du cadre de cintrage final.

Le procédé peut être appliqué aussi bien sur des vitres à cintrer individuellement que sur plusieurs vitres à cintrer simultanément (pour la fabrication de vitres composites courbées).

Une fois que les vitres ont été positionnées entre le cadre de cintrage et la forme supérieure, le cadre de cintrage, dans la première étape de cintrage par presse, ne touche pas les vitres sur leur zone marginale située le plus à l'extérieur, mais plus loin à l'intérieur dans la surface des vitres. Les vitres sont comprimées dans leur zone centrale contre la forme supérieure et y prennent approximativement le contour de la forme supérieure. Avant leur compression, les vitres peuvent soit être déposées sur le cadre de cintrage, soit être transférées directement par un convoyeur vers la forme supérieure et être maintenues sur la surface de façonnage au moyen de la pression différentielle. La pression différentielle peut par exemple être générée par aspiration d'air à travers des ouvertures de la surface de façonnage de la forme supérieure. Il est toutefois également possible, d'une manière connue en soi, de faire intervenir un flux de gaz (chaud) dirigé contre la forme supérieure sur la surface des vitres détournée de la surface de façonnage.

Le cadre de cintrage peut posséder une surface de façonnage fermée en forme d'anneau, mais il est également possible de limiter ses surfaces de façonnage venant en contact avec la surface du verre à certaines zones à cintrer.

Pendant que les vitres sont maintenues par le cadre de cintrage sur la forme supérieure, le cadre de cintrage final agit sur les zones marginales extérieures (c'est-à-dire « proéminente » ou faisant saillie vers l'extérieur par rapport au cadre de cintrage) libres de la vitre (au niveau inférieur) et les comprime contre la forme supérieure. De cette façon, les angles tangentiels finaux souhaités peuvent être réalisés très précisément, des gauchissements des vitres à l'intérieur de la zone circonscrite par le cadre de cintrage étant en même temps exclus. Les surfaces de façonnage de la forme supérieure et du cadre de cintrage final sont conçues en règle générale en complémentarité, la surface de façonnage du cadre de cintrage devant toutefois se contenter de sa fonction de pré-cintrage et de fixation.

Toutes les surfaces de façonnage qui viennent en contact avec les vitres chaudes sont évidemment usinées d'une manière habituelle et/ou pourvues d'un tissu ou d'une étoffe résistant à la chaleur et/ou d'un revêtement adéquat.

Une fois que les vitres ont reçu leur forme définitive, elles peuvent être transportées du cadre de cintrage final vers une section de refroidissement ou de précontrainte (trempe). Il est pour ce faire rationnel d'enlever la forme supérieure et le cadre de cintrage des surfaces du verre. Un autre dispositif de transport peut maintenant prendre les vitres cintrées dans le cadre de cintrage final. Il est toutefois aussi possible de soulever la vitre de la forme supérieure au moyen de la pression différentielle qui est générée par exemple par un dispositif de vide pour la sortir du cadre de cintrage final et la transférer à un autre dispositif de transport.

Dans une autre configuration du procédé, le cadre de cintrage final lui-même peut servir de moyen de transport et sortir avec les vitres de la zone de cintrage puis les acheminer vers un autre traitement.

Dans le cas où le cadre de cintrage final lui-même est le moyen de transport, le cadre de cintrage final peut être d'une manière particulièrement avantageuse conçu comme un cadre de précontrainte, c'est-à-dire de trempe. Cela supprime au moins un autre moyen de transport et un cadre de trempe séparé.

Les deux étapes de cintrage par presse peuvent de plus être assistées en prévoyant dans la forme supérieure un dispositif de génération d'une dépression. Si, pendant la compression, la surface de la vitre est en même temps aspirée en direction de la surface de façonnage de la forme supérieure, on peut en effet obtenir une orientation particulièrement bonne du cintrage notamment de la surface de la vitre.

Le cadre de cintrage final peut, dans une configuration avantageuse de l'invention, également être en plusieurs pièces, une ou plusieurs pièces de façonnage pouvant pivoter. La pièce de façonnage fixe est dans ce cas d'abord amenée en contact avec la vitre. Les pièces de façonnage mobiles peuvent ensuite être pivotées contre la forme supérieure. Dans cette variante du procédé selon l'invention, la vitre est fixée à d'autres endroits, tandis que les zones de courbure la plus forte, en règle générale les tangentes terminales, sont comprimées sur la forme supérieure.

D'autres détails et avantages de l'objet de l'invention ressortent sans dessein d'une limitation de la représentation graphique des diverses phases de mise en oeuvre du procédé dans un dispositif approprié et de la description circonstanciée suivante.

On voit, en représentation de principe simplifiée, en
- figure 1: le dispositif de cintrage juste après le transfert de la vitre à la forme supérieure convexe,
- figure 2: la première opération de presse avec le cadre de cintrage,
- figure 3: la deuxième opération de presse avec le cadre de cintrage final et
- figure 4: la vitre après l'opération de presse avant le transfert de la forme supérieure vers un dispositif de transport.

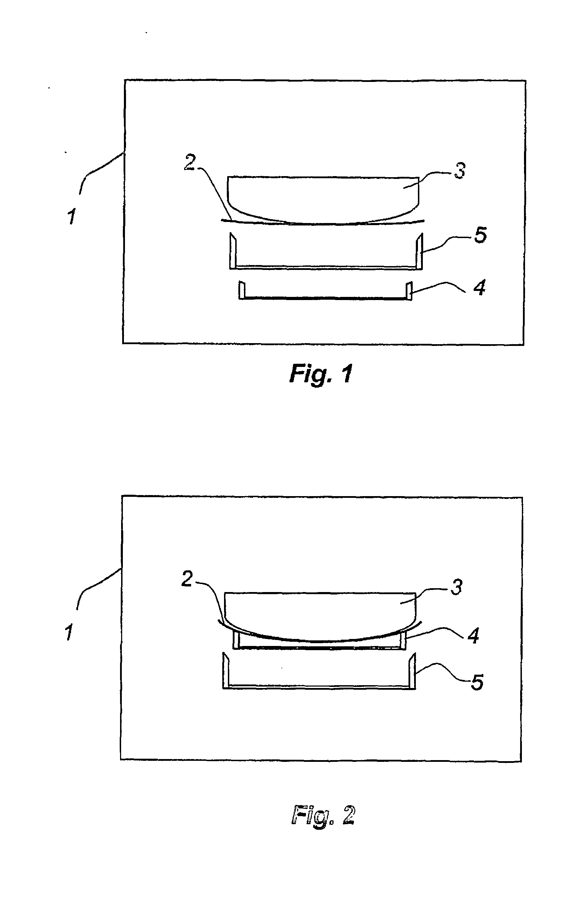

La figure 1 montre, dans une station de cintrage 1 indiquée par un cadre, une vitre 2 chauffée à température de cintrage, qui a été transférée d'un dispositif de transport non représenté vers une forme supérieure 3 à surface pleine comportant une surface de façonnage convexe. La vitre 2 est maintenue de manière connue en soi à l'aide d'une dépression sur la forme supérieure 3 et est déjà légèrement pré-formée en raison des forces de pression différentielle agissant à l'encontre de la pesanteur. Les moyens de génération de la dépression ne sont pas dessinés ici pour simplifier, et on peut imaginer parmi ceux-ci par exemple de nombreux canaux à air répartis sur la surface de la forme supérieure, à travers lesquels l'air provenant de la station de cintrage 1 ou de l'espace entre la forme supérieure 3 et la vitre 2 est aspiré. La pression atmosphérique régnant sous la vitre ramollie 2 pousse la vitre vers le haut en direction de la surface de façonnage même dans ses zones marginales.

Sous la forme supérieure 3 se trouvent le cadre de cintrage en forme d'anneau 4 et le cadre de cintrage final également en forme d'anneau 5. Les deux cadres de cintrage possèdent des surfaces de façonnage concaves. Le contour externe du cadre de cintrage 4 est légèrement plus petit que l'espace libre circonscrit par le cadre de cintrage final 5, de sorte que le cadre de cintrage 4 peut être guidé à travers l'espace libre évoqué.

La forme supérieure 3 et les deux cadres de cintrage 4, 5 sont mobiles les unes par rapport aux autres indépendamment les unes des autres. Les moyens d'entraînement corrélatifs ne sont pas représentés ici; des dispositifs et commandes appropriés font partie de l'état de la technique et ne sont pas importants pour le cas de réalisation décrit ici.

Comme on le voit en figure 2, le cadre de cintrage 4 pour la première opération de presse ou étape de cintrage par presse est déplacé à travers le cadre de cintrage final 5 vers la forme supérieure 3 jusqu'à ce que la vitre 2 arrive dans sa zone centrale en contact avec la forme supérieure 3 et s'y fixe. La vitre 2 est certes déjà partiellement pré-cintrée, mais ses zones marginales n'ont pas encore pris l'angle tangentiel final souhaité prédéfini par la surface de la forme supérieure 3. On peut maintenir, diminuer ou également arrêter la sollicitation par dépression de la vitre 2 selon les besoins après la compression par le cadre de cintrage dans la première étape de cintrage.

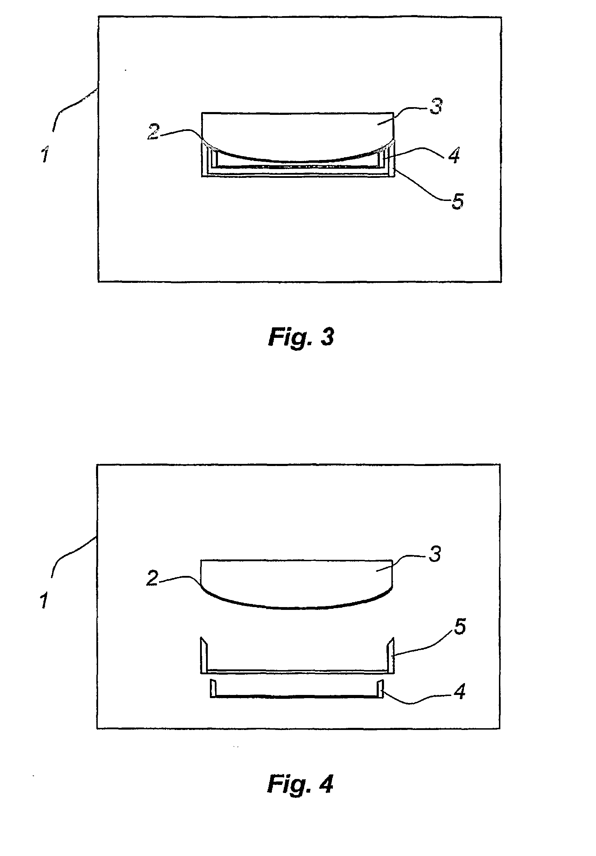

La deuxième opération de presse qui donne sa forme définitive à la vitre 2 est représentée en figure 3. Pour comprimer la vitre 2 fixée sur la forme supérieure 3 en travers du cadre de cintrage 4 même dans ses zones présentant la courbure la plus forte contre la surface de façonnage de la forme supérieure 3, le cadre de cintrage final 5 est déplacé en direction de la forme supérieure 3, touchant ainsi les zones périphériques de la vitre 2 et les comprimant contre la forme supérieure 3. En même temps, le cadre de cintrage 4 reste dans sa position et maintient la vitre 2 sur la forme supérieure 3 de manière à ce que la vitre 2 ne puisse pas se gauchir en direction du centre de la vitre pendant l'opération de presse par le cadre de cintrage 5. Comme l'espace libre à l'intérieur des surfaces de façonnage du cadre de cintrage final 5 est légèrement plus grand que les dimensions extérieures du cadre de cintrage 4, le cadre de cintrage final 5 peut être guidé avec un passage libre de tous côtés en passant par le cadre de cintrage 4 vers la forme supérieure 3.

La figure 4 représente la phase finale du procédé de cintrage, dans laquelle les deux cadres de cintrage 4, 5 se sont éloignés de la forme supérieure 3 et la vitre 2 dont le cintrage est terminé est maintenue au moyen d'une sollicitation par dépression de la vitre 2 en partant de la forme supérieure 3 - qui doit le cas échéant être maintenant réinstallée - sur la face inférieure de la forme supérieure 3. Dans cette phase du procédé de cintrage, un dispositif de transport ou un cadre de précontrainte (trempe) peut rentrer par le côté dans la station de cintrage 1 et prendre la vitre 2 sur la forme de cintrage 3 puis l'acheminer vers un autre traitement.

Les sens de mouvement des différentes composantes 3, 4, 5 du dispositif peuvent évidemment être permutés à volonté l'un par rapport à l'autre. Par exemple, les étapes de cintrage par presse peuvent être réalisées également en abaissant la forme supérieure 3 vers les cadres de cintrage 4, 5, et il est également possible de réaliser une étape de cintrage par presse en levant un cadre de cintrage et l'autre étape de cintrage par presse en baissant la forme de cintrage 3. Il est décisif pour le procédé que la vitre soit pré-formée au cours d'une première étape de cintrage par presse et que sa zone centrale soit fixée à la forme supérieure, tandis que, dans la deuxième étape de cintrage par presse, la vitre restant fixée, les zones marginales de la vitre sont cintrées au moyen d'un autre cadre de cintrage contre la surface de façonnage de la forme supérieure pour leur donner leur forme définitive.

## Revendications

1. Procédé de cintrage de vitres (2) chauffées à leur température de ramollissement en position horizontale comportant les caractéristiques suivantes :
- les vitres (2) sont chauffées à leur température de cintrage dans un four,
- les vitres (2) sont amenées entre un cadre de cintrage concave (4), dont les surfaces de façonnage décrivent un contour plus petit que les dimensions extérieures des vitres (2), et une forme supérieure convexe à surface pleine (3),
- les vitres (2) sont pressées entre le cadre de cintrage (4) et la forme supérieure (3) de manière à ce que les vitres (2) prennent au moins par endroits le contour de la forme supérieure (3) (première étape de cintrage par presse),
- un cadre de cintrage final en forme de cadre (5), dont les surfaces de façonnage correspondent à la forme définitive des vitres (2), est amené en contact avec les zones marginales proéminentes des vitres (2) et les vitres (2) sont pressées contre la forme supérieure (3) (deuxième étape de cintrage par presse) ,
- les vitres (2) dont le cintrage est terminé sont soumises à un traitement de refroidissement ou de trempe.

2. Procédé selon la revendication 1, **caractérisé en ce que** le cadre de cintrage (4) reste compressé pendant la deuxième étape de cintrage par presse 2.

3. Procédé selon la revendication 1 ou 2, **caractérisé en ce que** le cadre de cintrage (4) et la forme supérieure (3) sont enlevés des vitres (2) après la deuxième étape de cintrage par presse et que les vitres (2) sont acheminées à l'aide du cadre de cintrage final (5) vers le traitement de refroidissement ou de trempe.

4. Procédé selon la revendication 3, **caractérisé en ce que** le cadre de cintrage final (5) sert de cadre de trempe.

5. Procédé selon la revendication 1 ou 2, **caractérisé en ce que**
- le cadre de cintrage (4) et le cadre de cintrage final (5) sont enlevés des vitres (2) après la deuxième étape de cintrage par presse,
- les vitres (2) sont maintenues au moyen de la pression différentielle sur la forme supérieure (3),
- les vitres (2) sont déposées en provenance de la forme supérieure (3) sur un dispositif de transport,
- les vitres (2) sont acheminées au moyen du dispositif de transport vers le traitement de refroidissement ou de trempe.

6. Procédé selon la revendication 5, **caractérisé en ce que** le dispositif de transport est un cadre de trempe sur laquelle les vitres (2) sont précontraintes.

7. Procédé selon l'une quelconque des revendications précédentes, **caractérisé en ce que** la première et/ou la deuxième étape de cintrage par presse est assistée par pression différentielle.

8. Procédé selon l'une quelconque des revendications précédentes, **caractérisé en ce qu'**on utilise comme cadre de cintrage final (5) un cadre de cintrage en plusieurs pièces et que le cintrage final est obtenu par pivotement d'une ou plusieurs pièces du cadre de cintrage.

9. Dispositif de cintrage de vitres (2) chauffées à leur température de ramollissement, notamment pour la mise en oeuvre du procédé selon l'une quelconque des revendications précédentes, le dispositif comprenant
- un four pour chauffer les vitres (2),
- un cadre de cintrage concave (4) pour pré-former les vitres chauffées (2),
- une forme supérieure convexe à surface pleine (3),
- un cadre de cintrage final en forme de cadre (5) à surface de façonnage concave qui correspond sensiblement à la forme définitive des vitres (2),
- des moyens de déplacement du cadre de cintrage (4), du cadre de cintrage final (5) et de la forme supérieure (3) les unes par rapport aux autres,
- des moyens de transport des vitres (2) dont le cintrage est terminé vers une station de refroidissement ou de trempe,
**caractérisé en ce que** le cadre de cintrage (4) a un contour externe qui est plus petit que la surface circonscrite par le cadre de cintrage final (5), de sorte que le cadre de cintrage (4) peut être guidé à travers l'ouverture à l'intérieur des surfaces de façonnage du cadre de cintrage final (5) et en même temps comprimé avec celui-ci contre les vitres (2).

10. Dispositif selon la revendication précédente,
**caractérisé en ce que** le cadre de cintrage (4) est pourvu de surfaces de façonnage qui ne touchent les vitres (2) que par endroits.

11. Dispositif selon l'une quelconque des revendications de dispositif précédentes, **caractérisé en ce que** le cadre de cintrage final (5) est conçu comme un cadre de trempe.

12. Dispositif selon l'une quelconque des revendications de dispositif précédentes, **caractérisé en ce que** le cadre de cintrage final (5) est conçu comme un cadre de cintrage en plusieurs pièces à surfaces de façonnage pivotables.

13. Dispositif selon l'une quelconque des revendications de dispositif précédentes, **caractérisé en ce que** la forme supérieure (3) est équipée de moyens de génération d'une dépression entre la surface de façonnage de la forme supérieure (3) et la surface des vitres (2) s'étendant au-dessus.

## Claims

1. Method of bending glass panes (2) heated to their softening temperature in the horizontal position, having the following characteristics:
- the panes (2) are heated to their bending temperature in a furnace,
- the panes (2) are brought between a concave bending frame (4), the shaping surfaces of which describe a smaller contour than the external dimensions of the panes (2), and a convex upper form with a solid surface (3),
- the panes (2) are pressed between the bending frame (4) and the upper form (3) so that the panes (2) assume, at least at certain points, the contour of the upper form (3) (first press-bending step),
- a frame-shaped final-bending frame (5), the shaping surfaces of which correspond to the final shape of the panes (2), is brought into contact with the protruding marginal regions of the panes (2), and the panes (2) are pressed against the upper form (3) (second press-bending step),
- the panes (2) on which the bending operation has been completed are subjected to a cooling or quenching treatment.

2. Method according to Claim 1, **characterized in that** the bending frame (4) remains compressed during the second press-bending step 2.

3. Method according to Claim 1 or 2, **characterized in that** the bending frame (4) and the upper form (3) are removed from the panes (2) after the second press-bending step and **in that** the panes (2) are conveyed to the cooling or quenching treatment location with the aid of the final-bending frame (5) .

4. Method according to Claim 3, **characterized in that** the final-bending frame (5) serves as a quenching frame.

5. Method according to Claim 1 or 2, **characterized in that**
- the bending frame (4) and the final-bending frame (5) are removed from the panes (2) after the second press-bending step,
- the panes (2) are held by means of differential pressure on the upper form (3),
- the panes (2) are deposited from the upper form (3) onto a conveying device,
- the panes (2) are conveyed by means of the conveying device to the cooling or quenching treatment location.

6. Method according to Claim 5, **characterized in that** the conveying device is a quenching frame on which the panes (2) are prestressed.

7. Method according to any one of the preceding claims, **characterized in that** the first and/or the second press-bending step is assisted by differential pressure.

8. Method according to any one of the preceding claims, **characterized in that** the final-bending frame (5) used is a multipart bending frame and **in that** final bending is achieved by pivoting one or more parts of the bending frame.

9. Device for bending panes (2) heated to their softening temperature, in particular for implementing the method according to any one of the preceding claims, the device comprising
- a furnace for heating the panes (2),
- a concave bending frame (4) for preforming the heated panes (2),
- a convex upper form (3) with a solid surface,
- a frame-shaped final-bending frame (5) with a concave shaping surface which substantially corresponds to the final shape of the panes (2),
- means for moving the bending frame (4), the final-bending frame (5) and the upper form (3) relative to one another,
- means for conveying the panes (2) on which the bending operation has been completed to a cooling or quenching station,
**characterized in that** the bending frame (4) has an outer contour which is smaller than the surface circumscribed by the final-bending frame (5), with the result that the bending frame (4) can be guided through the opening within the shaping surfaces of the final-bending frame (5) and at the same time compressed therewith against the panes (2).

10. Device according to the preceding claim, **characterized in that** the bending frame (4) is provided with shaping surfaces which touch the panes (2) only at certain points.

11. Device according to any one of the preceding device claims, **characterized in that** the final-bending frame (5) is designed as a quenching frame.

12. Device according to any one of the preceding device claims, **characterized in that** the final-bending frame (5) is designed as a multipart bending frame with pivotable shaping surfaces.

13. Device according to any one of the preceding device claims, **characterized in that** the upper form (3) is equipped with means for generating a negative pressure between the shaping surface of the upper form (3) and the surface of the panes (2) extending above.

## Patentansprüche

1. Verfahren zum Biegen von auf Erweichungstemperatur erhitzten Glasscheiben (2) in horizontaler Position, das folgende Merkmale umfasst:
- die Glasscheiben (2) werden auf ihre Biegetemperatur in einem Ofen erhitzt,
- die Glasscheiben (2) werden zwischen einen konkaven Biegerahmen (4), dessen Formgebungsflächen einen kleineren Umfang als die Außenabmessungen der Glasscheiben (2) einbeschreiben, und eine konvexe obere Form (3) mit voller Oberfläche gebracht,
- die Glasscheiben (2) werden zwischen dem Biegerahmen (4) und der oberen Form (3) derart gepresst, dass die Glasscheiben (2) wenigstens stellenweise die Gestalt der oberen Form (3) annehmen (erste Biegestufe durch Pressen),
- ein Fertigbiegerahmen (5) mit der Gestalt eines Rahmens, dessen Formgebungsflächen der endgültigen Gestalt der Glasscheiben (2) entsprechen, wird mit den hervorstehenden Randbereichen der Glasscheiben (2) in Berührung gebracht, und die Glasscheiben (2) werden an die obere Form (3) gepresst (zweite Biegestufe durch Pressen) und
- die Glasscheiben (2), deren Biegevorgang beendet ist, werden einer Abkühl- oder Vorspannbehandlung unterworfen.

2. Verfahren nach Anspruch 1, **dadurch gekennzeichnet, dass** der Biegerahmen (4) während der zweiten Biegestufe durch Pressen 2 angedrückt bleibt.

3. Verfahren nach Anspruch 1 oder 2, **dadurch gekennzeichnet, dass** der Biegerahmen (4) und die obere Form (3) nach der zweiten Biegestufe durch Pressen von den Glasscheiben (2) entfernt werden, **und dass** die Glasscheiben (2) mittels des Fertigbiegerahmens (5) zu der Abkühl- oder Vorspannbehandlung gebracht werden.

4. Verfahren nach Anspruch 3, **dadurch gekennzeichnet, dass** der Fertigbiegerahmen (5) als Vorspannrahmen dient.

5. Verfahren nach Anspruch 1 oder 2, **dadurch gekennzeichnet, dass**
- der Biegerahmen (4) und der Fertigbiegerahmen (5) nach der zweiten Biegestufe durch Pressen von den Glasscheiben (2) entfernt werden,
- die Glasscheiben (2) mittels des Differentialdrucks an der oberen Form (3) gehalten werden,
- die Glasscheiben (2), die von der oberen Form (3) kommen, auf einer Transporteinrichtung abgelegt werden und
- die Glasscheiben (2) mittels der Transporteinrichtung zu der Abkühl- oder Vorspanneinrichtung gebracht werden.

6. Verfahren nach Anspruch 5, **dadurch gekennzeichnet, dass** die Transporteinrichtung ein Vorspannrahmen ist, auf welchem die Glasscheiben (2) vorgespannt werden.

7. Verfahren nach einem der vorhergehenden Ansprüche, **dadurch gekennzeichnet, dass** die erste und/oder die zweite Biegestufe durch Pressen von einem Differentialdruck unterstützt wird.

8. Verfahren nach einem der vorhergehenden Ansprüche, **dadurch gekennzeichnet, dass** als Fertigbiegerahmen (5) ein mehrteiliger Biegerahmen verwendet wird, und dass die endgültige Biegung durch Schwenken eines oder mehrerer Teile des Biegerahmens erhalten wird.

9. Vorrichtung zum Biegen von auf Erweichungstemperatur erhitzten Glasscheiben (2), insbesondere für die Durchführung des Verfahrens nach einem der vorhergehenden Ansprüche, wobei die Vorrichtung:
- einen Ofen für das Erhitzen der Glasscheiben (2),
- einen konkaven Biegerahmen (4) für die Vorformgebung der erhitzten Glasscheiben (2),
- eine konvexe obere Form (3) mit voller Oberfläche,
- einen Fertigbiegerahmen (5) mit der Gestalt eines Rahmens mit konkaver Formgebungsfläche, die im Wesentlichen der endgültigen Gestalt der Glasscheiben (2) entspricht,
- Mittel für die Bewegung von Biegerahmen (4), Fertigbiegerahmen (5) und oberer Form (3) in Bezug aufeinander und
- Mittel für den Transport der Glasscheiben (2), deren Biegevorgang beendet ist, zu einer Abkühl- oder Vorspanneinrichtung
umfasst, **dadurch gekennzeichnet, dass** der Biegerahmen (4) einen Außenumfang hat, der kleiner als die von dem Fertigbiegerahmen (5) einbeschriebene Oberfläche derart ist, dass der Biegerahmen (4) durch die Öffnung im Inneren der Formgebungsflächen des Fertigbiegerahmens (5) hindurch geführt und gleichzeitig mit diesem an die Glasscheiben (2) angedrückt werden kann.

10. Vorrichtung nach dem vorhergehenden Anspruch, **dadurch gekennzeichnet, dass** der Biegerahmen (4) mit Formgebungsflächen versehen ist, welche die Glasscheiben (2) nur stellenweise berühren.

11. Vorrichtung nach einem der sie betreffenden vorhergehenden Ansprüche, **dadurch gekennzeichnet, dass** der Fertigbiegerahmen (5) wie ein Vorspannrahmen konstruiert ist.

12. Vorrichtung nach einem der sie betreffenden vorhergehenden Ansprüche, **dadurch gekennzeichnet, dass** der Fertigbiegerahmen (5) als ein mehrteiliger Biegerahmen mit schwenkbaren Formgebungsflächen konstruiert ist.

13. Vorrichtung nach einem der sie betreffenden vorhergehenden Ansprüche, **dadurch gekennzeichnet, dass** die obere Form (3) mit Mitteln zur Erzeugung eines Unterdrucks zwischen der Formgebungsfläche der oberen Form (3) und der Oberfläche der Glasscheiben (2), die sich darüber erstreckt, versehen ist.
